Europäisches Patentamt

European Patent Office

Office européen des brevets

(19)

(11) Veröffentlichungsnummer: **0 171 522**
**B1**

(12) **EUROPÄISCHE PATENTSCHRIFT**

(45) Veröffentlichungstag der Patentschrift: 26.09.90

(51) Int. Cl.⁵: **A 47 J 39/00**

(21) Anmeldenummer: **85106278.6**

(22) Anmeldetag: **22.05.85**

(54) **Vorrichtung zur Wärmebehandlung von Nahrungsmitteln bzw. Speisen mit Messfühlerrohr.**

(30) Priorität: **04.08.84 DE 3428792**

(43) Veröffentlichungstag der Anmeldung:
**19.02.86 Patentblatt 86/08**

(45) Bekanntmachung des Hinweises auf die
Patenterteilung:
**26.09.90 Patentblatt 90/39**

(84) Benannte Vertragsstaaten:
**AT BE CH DE FR GB IT LI LU NL SE**

(56) Entgegenhaltungen:
**EP-A-0 092 851
DE-A-2 541 374
GB-A-2 010 078
US-A-3 744 474**

(73) Patentinhaber: **LechMetall Landsberg GmbH
Iglinger Strasse 62
D-8910 Landsberg a. Lech (DE)**

(72) Erfinder: **Meister, Siegfried
Siemensstrasse 2
D-8910 Landsberg a.L. (DE)**

(74) Vertreter: **Goddar, Heinz J., Dr. et al
FORRESTER & BOEHMERT Widenmayerstrasse
4/I
D-8000 München 22 (DE)**

Courier Press, Leamington Spa, England.

**Beschreibung**

Die Erfindung betrifft eine Vorrichtung zur Wärmebehandlung von Nahrungsmitteln, insbesondere zur Zubereitung von Speisen mittels Dampf oder eines Dampf-/Luft-Gemisches gemäß dem Oberbegriff von Anspruch 1.

Derartige Vorrichtungen zur Wärmebehandlung von Nahrungsmitteln bzw. Speisen sind in verschiedenen Ausführungsformen beispielsweise aus der DE—B—27 31 191 und der DE—U—81 31 827.8 bekannt. Gewöhnlich wird bei derartigen Vorrichtungen z.B. zum Auftauen von tiefgefrorenen Lebensmittels oder zum Zubereiten von Speisen, d.h. etwa zum Kochen, Braten oder Backen, in den Garraum Wasserdampf eingeführt, der sich mit der im Garraum vorhandenen Luft mischt und diese teilweise verdrängt.

Der Dampf bzw. das Dampf-/Luft-Gemisch gibt seine Wärme an das Gargut, das Auftaugut oder dergleichen ab, wobei der Dampfanteil kondensiert und das Kondensat über eine gewöhnlich im Boden des Garraumes mündende Kondensatorleitung ablaufen kann. Der so ''verbrauchte'' Dampf wird über die Dampfversorgung in den Garraum nachgespeist Je nach dem Zustand des Auftaugutes, Gargutes oder dergleichen ist der Nachspeisebedarf dabei unterschiedlich groß, so daß es sich empfiehlt, die Dampfzufuhr zu steuern oder zu regeln.

In der DE—B—27 31 191 ist es zum Regeln der Dampfzufuhr bereits vorgeschlagen worden, in der Kondensatableitung einen Temperaturfühler eines Temperaturreglers anzubringen, mit dem die Dampfzufuhr in Abhängigkeit von der in der Kondensatableitung herrschenden Temperatur geregelt wird. Eine solche ausgebildete Vorrichtung regelt die Dampfzufuhr in den Garraum gewöhnlich auch zufriedenstellend und ermöglicht einen ökonomischen und energiesparenden Betrieb. Jedoch kann an dem Temperaturfühler in dem Kondensatablauf, der auch—zumindest teilweise—gleichzeitig zum Ableiten von von den Speisen herunterlaufendem Fett oder Saft dient, eine Zusetzung auftreten, indem sich Fett- und Saftanteile am Ort des Temperaturfühlers niederschlagen und diesen verkrusten, was aber zu einer Verfälschung der gemessenen Temperatur führt. Auch kann bei einem unachtsamen Betrieb der Vorrichtung, bei einer Überladung des Garraumes oder aufgrund sonstiger Umstände der Kondensatablauf teilweise zugesetzt sein, so daß der Temperaturfühler allenfalls mit einer merklichen Verzögerung anspricht. Nicht zuletzt ist eine Anordnung des Temperaturfühlers in dem Kondensatablauf auch wartungs- und reinigungstechnisch nicht sonderlich vorteilhaft, insbesondere, wenn der Kondensatablauf sich in ein Kondensatabzugsrohr und einen Fettablauf aufteilt, was teilweise vorgesehen ist, wobei letzterer beispielsweise mit einer verschiebbaren Manschette an den Kondensatablauf gekoppelt ist. Je nach Anordnung des Temperaturfühlers ist dieser nur mit einem gewissen Aufwand zu erreichen, wobei zusätzlich zu beachten ist, daß mit zunehmendem Strömungsabstand des Temperaturfühlers von dem Garraum die Regelung den tatsächlichen Verhältnissen entsprechend zunehmend nachläuft.

Aus der EP—A—0 092 851 ist eine Vorrichtung zur Wärmebehandlung von Nahrungsmitteln mittels Dampf oder eines Dampf-/Heißluftgemisches mit einem Garraum und einer nach Maßgabe eines Meßfühlers regelbaren Dampfversorgung bekannt. Dabei ist der Garraum mit der Umgebung mittels eines Meßfühlerrohres verbunden. Dieses Meßfühlerrohr umfaßt ein U-Rohr mit Wasserfüllung und eine Flüssigkeitssonde, die bei Berührung mit der Flüssigkeit ein Signal zur Steuerung der Heizung des Dampferzeugers liefert. Auch damit ist eine gewisse Trägheit bei der Steuerung der Heizung über den Druck verbunden.

Eine Vorrichtung zur Wärmebehandlung von Nahrungsmitteln mittels Dampf oder eines Dampf-/Heißluftgemisches ist auch aus der DE—A—25 41 374 bekannt. Diese Vorrichtung weist einen Dampferzeuger mit einer steuerbaren Heizung auf, wobei der Dampferzeuger über eine Dampfzuleitung mit einem Garraum verbunden ist. Ein Gebläse wälzt den Dampf bzw. die Luft im Garraum um. Im Garraum ist ein Ablauf für Kondensat vorgesehen. Weiterhin umfaßt die Vorrichtung eine Steuereinrichtung für die Heizung und eine Öffnung in einer seitlichen oder oberen Wand des Garraums, welche in ein Meßfühlerrohr führt, in dem ein mit der Steuereinrichtung gekoppelter Fühler angeordnet ist.

Bei dieser bekannten Vorrichtung ist der Fühler im Meßfühlerrohr wieder als Temperaturfühler ausgebildet, so daß wegen der wieder vorhandenen trägen thermischen Masse des Temperaturfühlers die Ansprechgeschwindigkeit des Fühlers auf Strömungsänderungen im Meßfühlerrohr nicht unter allen Umständen den gestellten Anforderungen entspricht.

Der Erfindung liegt daher die Aufgabe zugrunde, eine Vorrichtung der gattungsgemäßen Art zu schaffen, welche ein verbessertes genaueres Ansprechen des Fühlers im Meßfühlerrohr und damit der Steuereinrichtung für die Dampferzeugung auf den Zustand des das Meßfühlerrohr durchströmenden Mediums gewährleistet.

Diese Aufgabe wird von einer Vorrichtung der eingangs genannten Gattung mit den Merkmalen des Kennzeichens von Anspruch 1 gelöst. Vorteilhafte Ausgestaltungen sind Gegenstand der abhängigen Ansprüche.

Erfindungsgemäß ist der Fühler ein den Druck oder die Strömungsgeschwindigkeit des das Meßfühlerrohr durchströmenden Mediums erfassende Einrichtung.

Das erfindungsgemäße Meßfühlerrohr kann gesondert und an einem Ort angebracht sein, der vor einem Eindringen von Kondensat, flüssigem Fett- oder Speisensäften schützt.

Bei dem Eindringen von Dampf bzw. eines Dampf-Heißluft-Gemisches verdrängt der Dampf bzw. das Gemisch die in dem Garraum befindliche Luft und zwar aufgrund eines gewöhnlich vorhandenen Gebläses wie auch wegen des relativ begrenzten Raumes ohne merkliche Temperaturschichtung.

Die Regelung der Dampfzufuhr oder der Zufuhr des Gemisches in den Garraum wird gewöhnlich derart vorgenommen, daß bei Erreichen einer bestimmten Temperatur die Dampfzufuhr unterbrochen, oder ggf. eine Dampfproduktion abgestellt wird, woraufhin aber der in dem Garraum vorhandene Dampf weiter noch Wärme abgibt und kondensiert. Dies führt wegen der erheblichen Volumenänderung bei dem Übergang von Dampf zu Kondensat zu einem Unterdruck im Garraum, woraufhin durch die Verbindungen des Garraums zur Umgebung, also auch durch das erfindungsgemäß vorgesehene Meßfühlerrohr, kalte Umgebungsluft angesaugt wird. Wie das auch bereits in dem DE—U—81 31 827.8 beschrieben ist, dessen Offenbarungsgehalt in die Beschreibung der hier offenbarten Erfindung voll inhaltlich einbezogen wird, wird der hierdurch an dem Meßfühler auftretende Temperaturunterschied zu einer Schaltung bzw. genauen Wiederanschaltung der Dampfzufuhr bzw. der Dampfproduktion genutzt. Bei einem Einbau des Temperaturfühlers in der Kondensatableitung durchströmt die angesaugte Umgebungsluft zunächst einen relativ langen Abschnitt der Kondensatableitung bis sie zu dem Meßfühler gelangt.

Hierdurch wird die Umgebungsluft gleichsam im Wärmetausch mit der Kondensatableitung geführt, wärmt sich also beim Einströmen auf, so daß zumindest zu Beginn die Wiederzufuhr von Dampf bzw. die Wiederanschaltung der Dampfproduktion nicht ausgelöst wird, bzw. die zunächst einströmende Umgebungsluft die Wiederzufuhr bzw. die Wiederanschaltung nicht auslöst. Das eigens und nur für den Meßfühler vorgesehene Meßfühlerrohr dagegen kann relativ kurzbauend ausgebildet sein, so daß eine zusätzliche Verbesserung der Feinfühligkeit der Regelung erreichbar ist.

Die Lehre der Erfindung erstreckt sich auch auf eine Anordnung im unteren Bereich des Garraumes. Zwar soll eine verschmutzungsgefährdete Anordnung in dem Kondensatableiter selbst vermieden werden, jedoch gibt eine besondere Ausgestaltung der erfindungsgemäßen Lehre an, das Meßfühlerrohr in einem Bypass zu dem Kondensatableiter vorzusehen. Hiermit sind zwar nicht im vollen Umfange die Vorteile erreicht, die sich, wie zuvor beschrieben, bei einem unmittelbar mit der Umgebung in Verbindung stehenden Meßfühlerrohr ergeben, jedoch sind die wesentlichen Nachteile überwunden, die, wie eingangs ausgeführt, mit einer Anordnung des Meßfühlers in dem Kondensatableiter verbunden sind. Eine derartige Ausgestaltung erfordert nur geringfügige Modifikationen bei einer in Rede stehenden Vorrichtung, ist dementsprechend auch ggf. zu einem nachträglichen Einbau bzw. Umbau geeignet, löst jedoch wirkungsvoll die mit der Anordnung des Meßfühlers in dem Kondensatableiter selbst verbundenen Probleme.

Bei einer Vorrichtung der in Rede stehenden Art, insbesondere einer wie sie in dem DE—U—81 31 827.8 beschrieben ist, unterscheidet man neben dem Garraum einen zu dem Garraum hin teilweise abgetrennten Druckraum, in dem ein Gebläserad ggf. mit einer umgebenden Heizschlange angeordnet ist, mit dem Heißluft erzeugbar ist und die Garraumatmosphäre, da die Saugseite des Gebläses mit dem Garraum in Verbindung steht, umwälzbar ist. Dies führt unmittelbar dazu, daß in dem Garraum sich, zumindest bei Betrieb des Gebläses, eine Strömung ausbildet. Um einen wirkungsvollen Einzug der kalten Luft zu gewährleisten lehrt die Erfindung in weiterer Ausgestaltung, daß zumindest das Meßfühlerrohr in Bezug auf eine im Garraum ggf. vorherrschende Strömungsrichtung senkrecht, bevorzugt aber in einem flachen Winkel zu dieser Strömungsrichtung mündet, wobei sich versteht, daß die Mündung des Meßfühlerrohres in Richtung der Strömungsrichtung weist, nicht dieser entgegengesetzt. Diese Lehre ist nicht nur in vorteilhafter Weise bei einer Anordnung des Meßfühlerrohres im oberen Bereich oder in der Garraumdecke vorteilhaft, sondern auch bei einer Anordnung des Meßfühlerrohes im Garraumboden oder an einer sonstigen Stelle.

Zur wirkungsvollen Regelung der Dampfproduktion, um Fehlreaktionen des Meßfühlers vorzubeugen, schlägt die Erfindung zusätzlich vor, das Meßfühlerrohr absperrbar auszubilden, etwa mittels eines Ventiles, eines Schiebers oder dergleichen. Bei einer derartigen Ausgestaltung ist auch weiterhin eine besondere Regelung derart vorgesehen, daß das Ventil bzw. der Schieber in dem Meßfühlerrohr geschlossen ist, wenn Dampf produziert wird bzw. Dampf und/oder ein Dampf-/Heißluftgemisch in den Garraum einströmt. Sobald der Meßfühler in dem Meßfühlerrohr eine bestimmte vorgegeben Schalttemperatur, etwa zwischen 95 und 100°C, erreicht, wird die Dampfzufuhr bzw. die Dampfproduktion gestoppt und das in dem Meßfühlerrohr befindliche Ventil bzw. das sonstige Absperrmittel geöffnet. So strömt durch das Meßfühlerrohr lediglich bei abgestellter Dampfzufuhr Umgebungsluft in den Garraum ein.

Die schon angesprochene Abkühlung, die die entströmende Umgebungsluft bei abgeschalteter Dampfzufuhr bewirkt, führt, wiederum nach Erreichen einer bestimmten, vorgegebenen Schalttemperatur, dazu, daß die Dampfproduktion bzw. die Dampfzufuhr wieder angeschaltet wird und das Absperrmittel in dem Meßfühlerrohr wieder geschlossen wird.

Wie sich aus der vorstehenden Darstellung ergibt, ist für die Regelung der Dampfproduktion bzw. Dampfzufuhr wesentlich, daß der Meßfühler in dem Meßfühlerrohr mit kalter Umgebungsluft beaufschlagt wird. Bei der gewöhnlichen Ausgestaltung der hier in Rede stehenden Vorrichtung wird jedoch bei Erreichen der Schalttemperatur des Meßfühlers und einer daraufhin erfolgten Abstellung der Dampfzufuhr nicht nur kalte Umgebungsluft durch das Meßfühlerrohr, son-

dern auch durch die Kondensatableitung in den Garraum gesaugt. Die Kondensatableitung weist in der Regel auch einen größeren Durchmesser als das Meßfühlerrohr auf, setzt also dem Einströmen von Umgebungsluft weniger Strömungswiderstand entgegen. Für die hier verfolgten Zwecke kommt es jedoch nur auf die Auslösung der Schaltung durch den Meßfühler an. Eventuell durch die Kondensatableitung einströmende Umgebungsluft trägt hierzu nichts bei, kann vielmehr allenfalls unvorteilhafterweise zu einer unerwünschten Abkühlung der Garraumatmosphäre und zu einer merklichen Verzögerung des Ansprechens des Meßfühlers führen. Um hier eine Verbesserung zu schaffen, ist es zweckmäßig die Kondensatableitung gegen die Umgebung absperrbar auszubilden. Beispielsweise kann in der Kondensatableitung ein Absperrventil vorgesehen sein, das genauso wie das Ventil in dem Meßfühlerrohr nach Maßgabe einer bestimmten Temperatur, gleichfalls beispielsweise 95 bis 100°C, an dem Meßfühlerrohr schaltbar ist, jedoch so, daß es die Kondensatabteilung absperrt, wenn das Ventil in dem Meßfühlerrohr öffnet und umgekehrt. Die Öffnungszeiten des Ventiles in dem Meßfühlerrohr sind relativ kurz, so daß eine solche kurzzeitige Absperrung der Kondensatableitung nicht hinderlich ist. Darüber hinaus kann diese Lehre aber auch etwa zu einer Ausgestaltung führen, daß die Kondensatabteilung nicht zur Umgebung hin geöffnet ist, sondern das Kondensat etwa taktweise über ein Schleusensystem oder dergleichen abgelassen wird.

Solange Dampf auf den Speisen im Garraum kondensiert, entsteht im Garraum kein nennenswerter Überdruck, der sich erst dann erhöht, wenn die Dampfkondensation auf den Speisen nur noch gering ist und Dampf aus dem Garraum durch das Rohr austritt. Ein Fühler erfaßt den damit verbundenen Druckanstieg und meldet diesen an die Steuereinrichtung zur entsprechenden Regelung der Heizung des Boilers.

Als bevorzugte Ausführungsform des Druckfühlers kann eine Druckmeßdose oder ein Flüssigkeitsmanometer dienen, welches beispielsweise mit einem Schalter funktionell gekoppelt ist, der die Höhe der Flüssigkeitshöhe erfaßt.

In weiterer Ausgestaltung der Erfindung kann das Rohr als Bypass-Leitung in das Ablaufrohr münden. Dies ermöglicht, den Fühler als einen die Strömungsgeschwindigkeit des das Rohr durchfließenden Mediums erfassenden Strömungsmesser auszubilden. Insgesamt kann es von Vorteil sein, in dem Ablaufrohr eine Drosselstelle vorzusehen, wobei die Bypass-Leitung auf der Abstromseite der Drosselstelle in das Ablaufrohr münden soll.

Nachfolgend ist die Erfindung noch anhand einer lediglich Ausführungsbeispiele darstellenden Zeichnung näher erläutert, dabei zeigt

Fig. 1 eine Ausführungsform gemäß der Erfindung, mit dem Meßfühlerrohr im Bypass zu der Kondensatableitung;

Fig. 2 eine weitere Ausführungsform gemäß der Erfindung, mit einem Manometermesser; und

Fig. 3 eine alternative Ausführungsform der Erfindung, mit einer Ausgestaltung des Meßfühlers als Druckmeßdose.

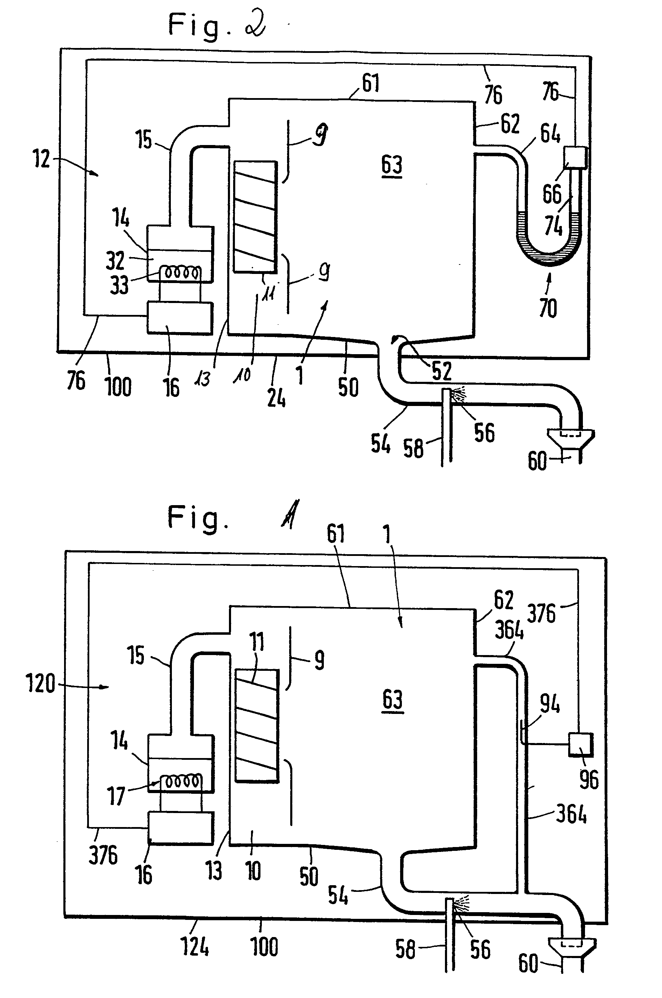

Bei dem in Fig. 1 dargestellten Ausführungsbeispiel ist neben einer Kondensatableitung 54 eine Trennwand 9 zu erkennen, die einen Vorraum bzw. Druckraum 10 von dem Garraum 1 zumindest teilweise abtrennt. In dem Druckraum 10 befindet sich ein Gebläse 11, das von einer Heizspirale umgeben ist.

Hinter einer Trennwand 13 ist des weiteren ein Boiler 14 mit einem in den Druckraum 10 mündenden Dampfzufuhrrohr 15 angeordnet. Eine unterhalb des Boilers 14 vorgesehene Steuerung 16 steht in Wirkverbindung mit einem Meßfühler 94 sowie einer Boilerheizung 17. Des weiteren steht die Steuerung 16 auch noch mit einem Wasserstandsschalter in Verbindung, was jedoch im Rahmen der hier beschriebenen Erfindung nicht weiter von Interesse ist.

Der schwach konisch nach unten zulaufende Boden 50 des Garraumes 1 besitzt an seiner tiefsten Stelle eine Ablauföffnung 52, welche in das Ablaufrohr 54 mündet. Das Ablaufrohr 54 erstreckt sich nach einem Knie unterhalb der Bodenplatte 24 des Gehäuses 100 und enthält eine Ablöschdüse 56, die an eine Wasserleitung 58 angeschlossen ist. Die Öffnung der Ablöschdüse 56 weist in Abströmrichtung und dient zum Ablöschen von Dampf, der aus dem Garraum 1 durch das Ablaufrohr 54 austritt. Hinter der Ablöschdüse 56 endet das Ablaufrohr 54 mit einem weiteren Knie über einer Abflußleitung 60.

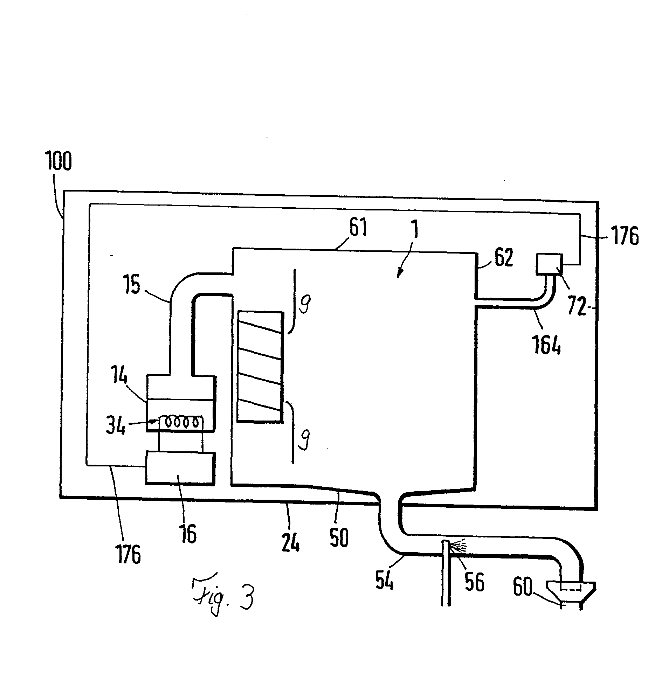

Gemäß einer Ausführungsform der Erfindung nach Fig. 2 ist im oberen Teil einer der Kammer 40 gegenüberliegenden Seitenwand 62 ein Meßrohr 64 angebracht, dessen Inneres mit dem Garraum 1 in Verbindung steht. Daß Meßrohr 64 kann abweichend von der Darstellung in Fig. 2 auch in der Rückwand 63 oder dem Deckel 61 des Garraums 1 münden. Das Meßrohr 64 ist zu einem U-förmigen Manometer 70 ausgebildet, hinter dem ein Sensor 66 angeordnet ist. Der Sensor kann entweder ein Druckfühler sein, der den Druck in dem von der Flüssigkeitssäule abgeschlossenen Teil 74 erfaßt. Alternativ kann der Sensor einen nicht dargestellten, in den Meßrohrteil 74 reichenden Taster aufweisen, der von der im Meßrohrteil 74 gegebenenfalls hochsteigenden Flüssigkeit des Flüssigkeitsmanometers 70 benetzt werden kann. Der Sensor 66 gibt auf die elektrische Steuerleitung 76 ein elektrisches Signal, welches in seiner Amplitude oder Zeitdauer oder Frequenz dem vom Sensor erfaßten Druck oder Höhenstand der Flüssigkeitssäule im Meßrohrteil 74 entspricht. Die elektrische Steuerleitung 76 ist gleichzeitig Eingangsleitung für eine Steuerschaltung 76, an deren Ausgänge die Heizwicklung 33 angeschlossen ist. Nicht dargestellt ist der Anschluß der Steuerschaltung an ein Stromversorgungsnetz für die Heizung 34.

Wenn bei Betrieb des Combi-Dämpfers gemäß Fig. 2 der Garraum 1 mit Dampf aus dem Boiler 14 vollgefüllt ist, erhöht sich der Druck im Garraum 1 geringfügig. Da das Meßrohr 64 mit dem Inneren des Garraums 1 kommuniziert, spricht das Flüssigkeitsmanometer 70 auf die leichte Druckerhöhung an, welche vom Sensor 66 erfaßt und in Form eines Steuersignals über die Steuerleitung 76 der Steuerschaltung 16 zugeführt wird. Die Steuerschaltung 16 setzt auf das in dieser Weise empfangene Signal die Heizleistung der Heizung 34 etwa durch Herabsetzen des Stromflusses durch die Heizwicklung 33 herab. Dadurch wird die Dampferzeugung in dem Boiler 14 gedrosselt. Wenn andererseits der Druck im Garraum 1 wieder auf einen Wert abfällt, der ein Anzeichen für erhöhten Dampfbedarf in dem Garraum 1 ist, wird dieser verminderte Druck vom Sensor 66 festgestellt und durch Abgabe eines diesen Druck repräsentierenden Steuersignals über die Steuerleitung 76 der Steuerschaltung 16 mitgeteilt, die daraufhin die Leistung der Heizung 34 erhöht. Durch die erhöhte Heizung des Wassers 32 im Boiler 14 wird dann mehr Dampf erzeugt und über die Kammer 10 dem Garraum 1 zugeführt.

In der Ausführungsform der Erfindung gemäß Fig. 3 steht ein Meßrohr 164 mit dem Inneren des Garraums 1 in druckmäßiger Verbindung und ist an dem dem Garraum gegenüberliegenden Ende mit einer Druckmeßdose 72 abgeschlossen. Die Druckmeßdose 72 ist über eine elektrische Steuerleitung 176 mit der Steuerschaltung 16 verbunden. Der übrige Aufbau und die Wirkungsweise des Combi-Dämpfers nach dieser Ausführungsform der Erfindung gleicht dem- bzw. derjenigen des vorher beschriebenen Ausführungsbeispiels. Die Druckmeßdose 72 gibt elektrische Steuersignale, die in ihrer Amplitude oder Zeitdauer oder Frequenz den von der Druckmeßdose 72 erfaßten Drücken im Meßrohr 164 entsprechen, an die Steuerschaltung 16, die die Leistung der Heizung 34 entsprechend den empfangenen Steuersignalen verändert.

Das Meßrohr 64 in Gestalt einer Bypass-Leitung 364 verbindet strömungsmäßig den Garraum 1 von einem oberen Bereich einer Garraum-Seitenwand 62 mit dem Ablaufrohr 54, und zwar bevorzugt auf der Abstromseite der Ablöschdüse. Innerhalb der Bypass-Leitung 364 ist ein Strömungsgeschwindigkeitsmesser 94 montiert, der beispielsweise mittels eines vom strömenden Medium angetriebenen freilaufenden Rades die Strömungsgeschwindigkeit des Mediums, also beispielsweise des Dampfes durch einen Meßkopf 96 aufzunehmen gestattet. Der Meßkopf 96 ist ausgangsseitig ähnlich wie in den vorangegangenen Ausführungsbeispielen de Erfindung über eine Steuerleitung 376 mit der Steuerschaltung 16 verbunden und gibt über diese Ausgangssignale entsprechend der von ihm festgestellten Strömungsgeschwindigkeiten ab. Auf diese Weise ist es möglich, die Leistung der Heizung 34 dann herabzuregeln, wenn eine ausreichende Menge Dampf aus dem mit Dampf gefüllten Garraum 1 durch die Bypass-Leitung 364 an dem Strömungsgeschwindigkeitsmesser 94 vorbeiströmt.

Es kann sich bei den vorgenannten Ausführungsformen der Erfindung als zweckmäßig erweisen, auf der Aufstromseite der Mündung der Bypass-Leitung 364 in das Ablaufrohr 54 eine kleine Drossel einzubauen, die das freie Entweichen des Dampfes aus dem Garraum über das Ablaufrohr 54 erschwert.

Die Erfindung ist auf Einzelheiten der vorstehend beschriebenen Ausführungsformen nicht beschränkt. So liegt es im Rahmen der Erfindung, die Meßrohre 64 oder 164 sowie die Bypass-Leitung 364 von dem oberen Bereich der Rückwand 63 des Garraumes oder der Decke 61 ausgehen zu lassen.

Ferner ist vorstehend ausgeführt worden, daß die Meßrohre 64, 164 und die Bypass-Leitung 364 vom oberen Bereich der Garraumwand ausgehen sollen. Es hat sich jedoch gezeigt, daß je nach erforderlicher Feinfühligkeit der Heizungsregelung das Meßrohr oder die Bypass-Leitung auch vom unteren Bereich der Garraum-Seitenoder Rückwand ausgehen kann.

Die in der vorstehenden Beschreibung, der Zeichnung und den Ansprüchen offenbarten Merkmale der Erfindung können sowohl einzeln als auch in beliebiger Kombination für die Verwirklichung der Erfindung, wie sie in den Ansprüchen gekennzeichnet ist, in ihrer verschiedensten Ausgestaltung von Bedeutung sein.

**Patentansprüche**

1. Vorrichtung zur Wärmebehandlung von Nahrungsmitteln mittels Dampf oder eines Dampf-/Heißluftgemisches, mit einem Dampferzeuger, der eine steuerbare Heizung aufweist und über eine Dampfzuleitung mit einem Garraum verbunden ist, einem Gebläse zum Umwälzen von Dampf und/oder Luft im Garraum (1), welcher einen Ablauf (52, 54) für Kondensat aufweist, einer Steuereinrichtung (16) für die Heizung und einer Öffnung in einer seitlichen (62, 63) oder oberen (61) Wand des Garraums (1), welche in ein Meßfühlerrohr (64, 164, 364) führt, in dem ein mit der Steuereinrichtung (16) gekoppelter Fühler (72, 70, 94) angeordnet ist, dadurch gekennzeichnet, daß der Fühler ein den Druck oder die Strömungsgeschwindigkeit des das Meßfühlerrohr (64, 164, 364) durchströmenden Mediums erfassende Einrichtung (70, 72, 94) ist.

2. Vorrichtung nach Anspruch 1, dadurch gekennzeichnet, daß der Fühler ein Flüssigkeitsmanometer (70) ist.

3. Vorrichtung nach Anspruch 1, dadurch gekenneichnet, daß der Fühler eine Druckmeßdose (72) ist.

4. Vorrichtung nach Anspruch 1, dadurch gekennzeichnet, daß der Fühler ein die Strömungsgeschwindigkeit des Mediums im Meßfühlerrohr (364) erfassender Strömungsmesser (94) ist.

5. Vorrichtung nach einem der vorangehenden Ansprüche, dadurch gekennzeichnet, daß der Kondensatablauf (54) mit einer Dampf-Ablöscheinrichtung (56, 58) ausgerüstet ist.

6. Vorrichtung nach einem der vorangehenden Ansprüche, dadurch gekennzeichnet, daß das Meßfühlerrohr als Bypass-Leitung (364) in den Kondensatablauf (54) mündet.

7. Vorrichtung nach einem der vorangehenden Ansprüche, dadurch gekennzeichnet, daß der Kondensatablauf (54) gegen die Umgebung absperrbar ist.

**Revendications**

1. Dispositif pour traiter par la chaleur des aliments, au moyen de vapeur ou d'un mélange vapeur/air chaud, comprenant un générateur de vapeur qui présente un système de chauffage pouvant être régulé et qui est raccordé à une enceinte de cuisson par l'intermédiaire d'une conduite d'alimentation en vapeur, un ventilateur pour faire circuler la vapeur et/ou l'air dans l'enceinte de cuisson (1) qui comporte un écoulement (52, 54) pour les condensats, un système de commande (16) pour le chauffage, ainsi qu'une ouverture dans une paroi latérale (62, 63) ou la paroi supérieure (61) de l'enceinte de cuisson (1), ouverture dans laquelle débouche un tube de sonde de mesure (64, 164, 364) dans lequel est agencée une sonde (72, 70, 94) couplée au système de commande (16), caractérisé en ce que la sonde est constituée par un dispositif (70, 72, 94) relevant la pression ou la vitesse de circulation du fluide circulant dans le tube de sonde de mesure (64, 164, 364).

2. Dispositif selon la revendication 1, caractérisé en ce que la sonde est un manomètre à liquide (70).

3. Dispositif selon la revendication 1, caractérisé en ce que la sonde est une boite dynamométrique de mesure de la pression (72).

4. Dispositif selon la revendication 1, caractérisé en ce que la sonde est un appareil (94) de mesure de la vitesse de circulation d'un fluide qui relève la vitesse de circulation du fluide dans le tube de sonde de mesure (364).

5. Dispositif selon l'une des revendications précédentes, caractérisé en ce que l'écoulement des condensats (54) est équipé d'un système d'extinction de la vapeur (56, 58).

6. Dispositif selon l'une des revendications précédentes, caractérisé en ce que le tube de sonde de mesure débouche dans l'écoulement des condensats (54), sous la forme d'une conduite en dérivation (364) (bipasse).

7. Dispositif selon l'une des revendications précédentes, caractérisé en ce que l'écoulement des condensats (54) peut être isolé de l'environnement.

**Claims**

1. Device for the heat treatment of food by means of steam or a steam/hot air mixture, with a steam generator, which comprises a controllable heating unit and is connected to a cooking chamber via a steam supply line, a blower for circulating steam and/or air in the cooking chamber (1), which comprises an outlet (52, 54) for condensate, a control device (16) for the heating unit and an opening in a side (62, 63) or upper (61) wall of the cooking chamber (1), which opening leads into a measuring sensor tube (64, 164, 364) containing a sensor (72, 70, 94), which is coupled to the control device (16), characterised in that the sensor is a device (70, 72, 94) which detects the pressure or the flow rate of the medium flowing through the measuring sensor tube (64, 164, 364).

2. Device according to Claim 1, characterised in that the sensor is a liquid manometer (70).

3. Device according to Claim 1, characterized in that the sensor is a pressure cell (72).

4. Device according to Claim 1, characterised in that the sensor is a flowmeter (94) which detects the flow rate of the medium in the measuring sensor tube (364).

5. Device according to one of the preceding Claims, characterised in that the condensate outlet (54) is provided with a steam quenching device (56, 58).

6. Device according to one of the preceding claims, characterised in that the measuring sensor tube leads as a by-pass line (364) into the condensate outlet (54).

7 Device according to one of the preceding Claims, characterised in that the condensate outlet (54) can be sealed off from the environment.

Fig. 2

Fig. 1

Fig. 3